# FASCICULE DE BREVET EUROPEEN

(11) **EP 1 323 624 B1**
(45) Date de publication et mention de la délivrance du brevet: **13.09.2006**
(21) Numéro de dépôt: 02293145.5
(22) Date de dépôt: 18.12.2002
(51) Int. Cl.: B62D 25/14

(54) **Ensemble structurel de planche de bord et procédé pour le réaliser**
Gesamtstruktur eines Armaturenbrettes und Verfahren zu dessen Herstellung
Structural unit for a dashboard and method for its production

(30) Priorité: 27.12.2001 FR 0116948
(43) Date de publication de la demande: 02.07.2003
(73) Titulaire: Faurecia Interieur Industrie, 92000 Nanterre (FR)
(72) Inventeur: Duchez, David, 78700 Conflans-Sainte-Honorine (FR)
(74) Mandataire: Lerner, François

(56) Documents cités:
- EP-A- 0 604 745
- EP-A- 0 881 007
- WO-A-01/68435
- WO-A-01/70558
- DE-A- 10 029 813

## Description

L'invention concerne un ensemble structurel de planche de bord et un procédé pour réaliser un tel ensemble.

De manière traditionnelle, une planche de bord de véhicule à moteur comprend une structure allongée métallique, généralement tubulaire et dénommée traverse, destinée à maintenir les pieds avant du véhicule et à servir de support à des éléments fonctionnels que l'on vient fixer dessus, et d'une manière générale à limiter les déformations de l'habitacle.

L'invention a pour but de réduire le nombre de pièces composant la structure de la planche de bord et le nombre d'opérations d'assemblage, afin de réduire les coûts, l'encombrement et le poids d'une telle structure.

Certaines structures de planche de bord actuellement sur le marché, voir par exemple le document EP-A- 1186516 qui couvre les préambules des revendications 1 et 4 comprennent une traverse métallique composée de deux tronçons tubulaires de sections différentes soudés bout-à-bout, afin d'adapter la résistance de la traverse aux efforts à encaisser. En effet, en cas d'accident, la structure de planche de bord doit entre autres limiter l'intrusion dans l'habitacle de la colonne de direction et de ses composants proche du conducteur (volant, coussin gonflable, gaine technique,...) ; or ceux-ci ne sont présents que du côté conducteur. En prévoyant un tronçon de traverse métallique de moindre résistance du côté du passager que du côté du conducteur, on réduit le poids de la planche de bord, sans en dégrader le cahier des charges. Toutefois, une telle planche de bord à traverse métallique mécano-soudée composée de deux tronçons tubulaires de sections différentes présente certes un poids réduit par rapport aux planches de bord traditionnelles, mais ne permet pas d'obtenir l'ensemble des avantages visés par l'invention.

Par ailleurs, il est proposé, en particulier dans US-A-5 358 300, de supprimer la structure allongée métallique et de réaliser une planche de bord en matériau plastique que l'on a adaptée, en particulier par l'assemblage de plusieurs couches fortement nervurées, pour reprendre les efforts encaissés de manière traditionnelle par la structure allongée métallique. En outre, certains éléments fonctionnels tels que les conduits d'air sont intégrés et non rapportés sur la structure de la planche de bord. Toutefois, une telle solution permet certes de réduire le poids de la planche de bord, simplifier son assemblage et améliorer sa compacité, mais elle est complexe à définir, à développer et à mettre en oeuvre, sans pour autant procurer la même résistance mécanique qu'une planche de bord munie d'une structure allongée métallique.

Pour remédier à ces différents inconvénients, l'invention propose que l'ensemble structurel de planche de bord comprenne :
- une structure allongée métallique comportant une première partie présentant une première épaisseur et une deuxième partie présentant une deuxième épaisseur inférieure à la première, et
- un élément fonctionnel structurant en matériau plastique intégrant un conduit aéraulique, surmoulé sur la structure allongée métallique.

La structure allongée métallique assure l'essentiel de la résistance mécanique. Sa résistance est adaptée en fonction des différents niveaux de contrainte auxquels elle est soumise sur sa longueur par la présence de deux parties d'épaisseurs différentes. L'élément fonctionnel étant surmoulé sur la structure allongée, il forme avec elle un ensemble monobloc, de sorte qu'en plus d'intégrer une fonction aéraulique, il supporte en outre une partie des contraintes mécaniques, ce qui permet de réduire l'épaisseur de la structure allongée.

Par conséquent, le poids de la planche de bord est réduit. De plus, l'encombrement de la planche de bord et le nombre d'opérations d'assemblage sont réduits du fait de l'intégration de la fonction aéraulique et mécanique à l'élément fonctionnel surmoulé.

En outre, l'invention concerne un procédé pour réaliser un tel ensemble structurel de planche de bord. Conformément à l'invention le procédé comprend les étapes suivantes :
- former une plaque métallique pour réaliser une structure allongée comprenant une première partie présentant une première épaisseur et une deuxième partie présentant une deuxième épaisseur inférieure à la première, et
- surmouler la structure allongée avec de la matière plastique pour obtenir un élément fonctionnel en matériau plastique solidaire de la structure allongée métallique.

En plus des avantages précités, cette solution permet, du fait de la réalisation de la structure allongée par formage, d'une part d'adapter relativement facilement la résistance mécanique de la structure allongée sur sa longueur en fonction des niveaux de contrainte auxquels elle est soumise, et d'autre part de surmouler relativement aisément la structure allongée malgré la présence de deux parties d'épaisseurs différentes.

Il faut comprendre par formage une opération d'estampage, d'emboutissage, de profilage ou analogue.

Selon une caractéristique complémentaire, l'invention propose que l'on estampe une première plaque métallique présentant sensiblement ladite première épaisseur et une deuxième plaque métallique présentant sensiblement ladite deuxième épaisseur, puis on assemble la première et la deuxième plaques métalliques pour réaliser la structure allongée, avant de la surmouler.

En variante, l'invention propose que :
- l'on place une première plaque métallique présentant ladite première épaisseur et une deuxième plaque métallique présentant ladite deuxième épaisseur dans une empreinte d'estampage, en ménageant une zone de jonction dans laquelle la première et la deuxième plaques métalliques se chevauchent,
- puis on estampe et on assemble simultanément la première et la deuxième plaques métalliques par déformation dans la zone de jonction des première et deuxième plaques métalliques.

Ainsi, la réalisation de la structure allongée présentant deux épaisseurs différentes s'effectue en une seule opération. L'assemblage peut être obtenu notamment par poinçonnage, clinchage ou collage.

Selon une autre variante, l'invention propose qu'on lamine une tôle d'épaisseur sensiblement constante dans un laminoir pour obtenir ladite plaque métallique présentant dans une première zone sensiblement ladite première épaisseur et dans une deuxième zone sensiblement ladite deuxième épaisseur.

Cette solution permet d'obtenir très simplement la structure allongée avec ses différentes épaisseurs. Pour ce faire, les cylindres des laminoirs pourront comprendre une section non-circulaire composée de plusieurs (au moins 2) arcs circulaires de rayons différents.

L'invention va apparaître encore plus clairement dans la description qui va suivre, faite en référence aux dessins annexés dans lesquels :
- la figure 1 illustre en perspective une première étape d'un procédé conforme à l'invention,
- la figure 2 est une vue en perspective suivant le plan repéré II-II à la figure 1,
- la figure 3 est une vue en perspective d'une deuxième étape du procédé,
- la figure 4 est une vue en perspective d'un ensemble structurel de planche de bord conforme à l'invention obtenu lors d'une troisième étape du procédé,
- la figure 5 illustre schématiquement une étape de procédé conforme à l'invention pour obtenir la structure allongée métallique.

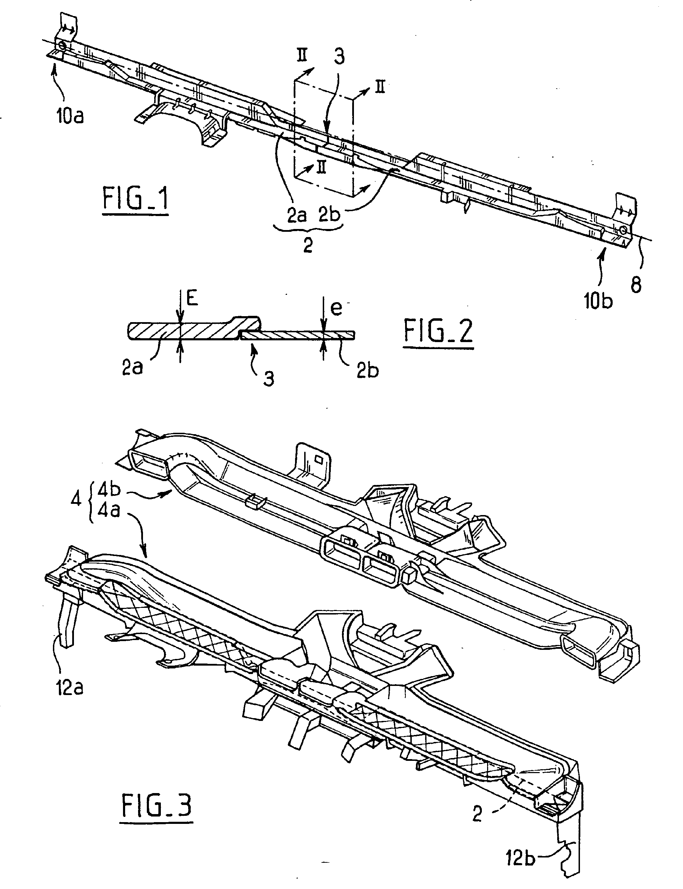

La figure 1 illustre une structure allongée métallique 2 de véhicule présentant une section sensiblement en forme de U et comprenant deux parties. L'une 2a, particulièrement robuste, située à gauche sur la figure, est destinée à venir en regard du poste de conduite. Elle représente sensiblement 40% de la longueur totale de la structure allongée.

L'autre 2b, plus légère, située à droite sur la figure, est destinée à venir en regard de l'essentiel de la console centrale du véhicule et du passager. Elle représente sensiblement 60% de la longueur totale de la structure allongée.

Ces deux parties 2a, 2b ont été obtenues par formage, notamment par estampage, de plaques métalliques d'épaisseurs différentes, de sorte que la partie robuste 2a présente une épaisseur E sensiblement deux fois plus élevée que celle de la partie légère 2b. De préférence, la partie robuste présentera une épaisseur sensiblement comprise entre 1 et 3 millimètres, tandis que la partie légère 2b présentera une épaisseur sensiblement comprise entre 0,3 et 2,5 millimètres.

Les deux parties 2a, 2b de la structure allongée peuvent être assemblées dans le prolongement l'une de l'autre, après formage, par soudage, en particulier par points, ou par collage, avec un léger chevauchement.

En variante, on peut réaliser l'assemblage des deux parties 2a, 2b de la structure allongée, par poinçonnage ou clinchage, en même temps que l'estampage des plaques dont elles sont issues, après les avoir superposées dans une zone de jonction 3, usuellement dénommée soyage.

La structure allongée assemblée s'étend alors suivant une direction d'allongement 8, entre deux extrémités 10a, 10b.

La structure allongée 2 est ensuite introduite dans un moule, où elle est recouverte de matière plastique par injection. La pièce 4a en matière plastique obtenue englobe la structure allongée 2 et intègre des piliers 12a, 12b situés aux extrémités 10a, 10b, destinés à être fixés aux pieds avant du véhicule, mais surtout un ensemble aéraulique comprenant des sorties d'air 16 pour le dégivrage, des conduits centraux 18a, 18b et latéraux 20a, 20b.

Ladite pièce 4a constitue le corps d'un élément structurel 4 et définit la partie inférieure dudit élément fonctionnel 4, lequel comprend en outre une partie supérieure 4b, formant couvercle venant recouvrir ledit corps 4a.

L'élément fonctionnel 4 en matériau plastique et la structure allongée métallique 2 constituent un ensemble structurel 1 de planche de bord destiné à réaliser la liaison entre les pieds avant du véhicule via les piliers 12a, 12b et à servir de reprise d'effort à un module de coussin gonflable et de support à une colonne de direction et à la planche de bord.

A proximité de la zone de jonction 3, une jambe de force 22 est fixée à la partie robuste 2a de la structure allongée, pour reprendre une partie des efforts supportés par la structure allongée et les transmettre à la structure du véhicule via le plancher. En alternative, la jambe de force 22 pourrait permettre de soutenir le plancher du véhicule à l'aide de l'ensemble structurel.

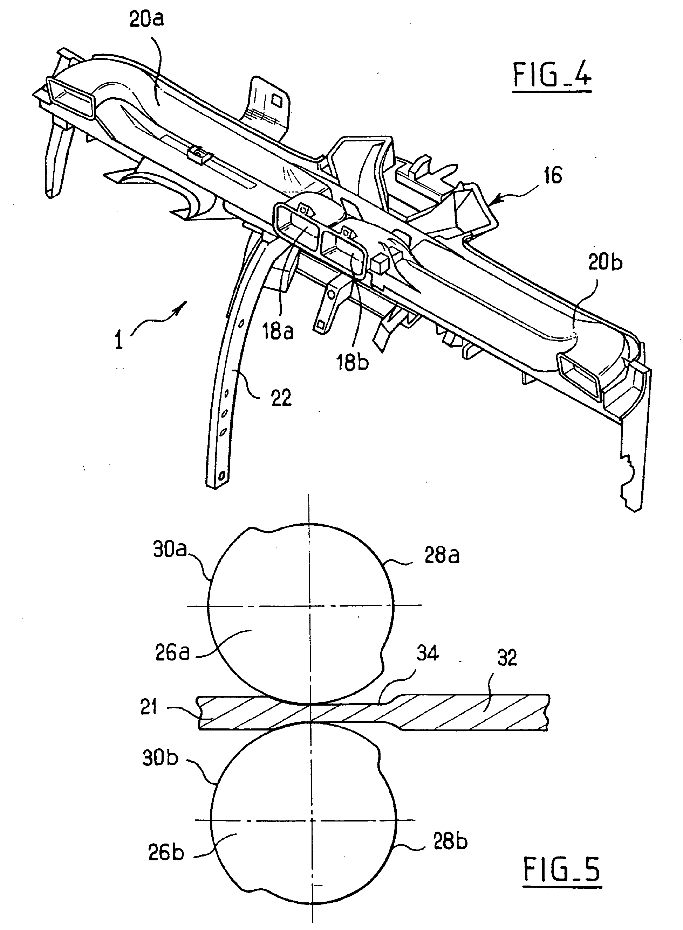

La figure 5 illustre une variante pour réaliser la structure allongée 2, consistant à faire passer une tôle métallique 24 d'épaisseur sensiblement constante entre deux rouleaux 26a, 26b de laminoir présentant chacun deux portions circulaires 28a, 28b ; 30a, 30b de rayons différents. Ainsi, au cours de la rotation des rouleaux, l'espace entre les rouleaux est successivement d'environ E, puis e, de sorte que l'on obtient une plaque présentant dans une première partie 32 l'épaisseur E correspondant à la partie robuste 2a de la structure allongée et dans une deuxième partie 34 l'épaisseur e correspondant à la partie légère 2b de la structure allongée. En plaçant ensuite ladite plaque dans un moule d'estampage on obtient alors directement les deux parties 2a, 2b de la structure allongée nécessairement solidaires l'une de l'autre puisqu'elles sont obtenues de matière.

Bien entendu, l'invention n'est nullement limitée à la réalisation qui vient d'être décrite à titre d'exemple non limitatif. Ainsi, pour réaliser la structure 2, on pourrait prévoir d'effectuer un laminage entre deux rouleaux de laminoir comportant chacun deux tronçons de diamètres différents accolés, de sorte que lesdits rouleaux ménagent entre eux un espacement sensiblement égale à e sur une partie de leur longueur et à E sur une autre partie de leur longueur.

On pourrait également réaliser ladite structure sous forme d'un profilé présentant sur sa longueur deux sections différentes.

## Revendications

1. Ensemble structurel (1) de planche de bord **caractérisé par**:
- une structure allongée métallique (2) comportant une première partie (2a) présentant une première épaisseur (E) et une deuxième partie (2b) présentant une deuxième épaisseur (e) inférieure à la première, et
- un élément fonctionnel (4) structurant en matériau plastique intégrant un conduit aéraulique (20a, 20b), surmoulé sur la structure allongée métallique.

2. Procédé pour réaliser un ensemble structurel (1) de planche de bord comprenant les étapes suivantes :
- former une plaque métallique pour réaliser une structure allongée (2) comprenant une première partie (2a) présentant une première épaisseur (E) et une deuxième partie (2b) présentant une deuxième épaisseur (e) inférieure à la première, et
- surmouler la structure allongée avec de la matière plastique pour obtenir un élément fonctionnel (4) en matériau plastique solidaire de la structure allongée métallique.

3. Procédé selon la revendication 2, **caractérisé en ce que** l'on estampe une première plaque métallique présentant sensiblement ladite première épaisseur et une deuxième plaque métallique présentant sensiblement ladite deuxième épaisseur, puis on assemble la première et la deuxième plaques métalliques pour réaliser la structure allongée, avant de la surmouler.

4. Procédé selon la revendication 2, **caractérisé en ce que** :
- on place une première plaque métallique présentant ladite première épaisseur et une deuxième plaque métallique présentant ladite deuxième épaisseur dans une empreinte d'estampage, en ménageant une zone de jonction (3) dans laquelle la première et la deuxième plaques métalliques se chevauchent,
- puis on estampe et on assemble simultanément la première et la deuxième plaques métalliques par déformation dans la zone de jonction des première et deuxième plaques métalliques.

5. Procédé selon la revendication 2, **caractérisé en ce qu'**on lamine une tôle d'épaisseur sensiblement constante dans un laminoir pour obtenir ladite plaque métallique présentant dans une zone (32) sensiblement ladite première épaisseur et dans une autre zone (34) ladite deuxième épaisseur.

6. Procédé selon la revendication 2, **caractérisé en ce que** l'on forme une première plaque métallique présentant sensiblement ladite première épaisseur et une deuxième plaque métallique présentant sensiblement ladite deuxième épaisseur, puis on assemble la première et la deuxième plaques métalliques par collage.

7. Procédé selon la revendication 2, **caractérisé en ce que** l'on forme une première plaque métallique présentant sensiblement ladite première épaisseur et une deuxième plaque métallique présentant sensiblement ladite deuxième épaisseur, puis on assemble la première et la deuxième plaques métalliques par soudure.

## Claims

1. A dashboard structural assembly (1) **characterised by**:
- an elongate metal structure (2) comprising a first portion (2a) having a first thickness (E) and a second portion (2b) having a second thickness (e) which is less than the first, and
- a structuring functional member (4) of plastics material incorporating an air duct (20a, 20b), over-moulded on the elongate metal structure.

2. A method for producing a dashboard structural assembly (1) comprising the following steps:
- forming a metal plate to produce an elongate structure (2) comprising a first portion (2a) having a first thickness (E) and a second portion (2b) having a second thickness (e) which is less than the first, and
- over-moulding the elongate structure with plastics material to obtain a functional member (4) of plastics material rigidly connected to the elongate metal structure.

3. A method according to claim 2, **characterised in that** a first metal plate having substantially said first thickness and a second metal plate having substantially said second thickness are die-stamped, then the first and second metal plates are assembled to produce the elongate structure, before over-moulding it.

4. A method according to claim 2, **characterised in that**:
- a first metal plate having said first thickness and a second metal plate having said second thickness are placed in a die stamping mould, providing a junction zone (3) in which the first and second metal plates overlap each other,
- then the first and second metal plates are die stamped and assembled simultaneously by deformation in the junction zone of the first and second metal plates.

5. A method according to claim 2, **characterised in that** a metal sheet of substantially constant thickness is rolled in a rolling mill to obtain said metal plate having in one zone (32) substantially said first thickness and in another zone (34) said second thickness.

6. A method according to claim 2, **characterised in that** a first metal plate having substantially said first thickness, and a second metal plate having substantially said second thickness are formed, then the first and second metal plates are assembled by adhesively securing.

7. A method according to claim 2, **characterised in that** a first metal plate having substantially said first thickness, and a second metal plate having substantially said second thickness are formed, then the first and second metal plates are assembled by welding.

## Patentansprüche

1. Gesamtstruktur (1) eines Armaturenbrettes, **gekennzeichnet durch**:
- eine metallische, längliche Struktur (2), die einen ersten Teil (2a) aufweist, der eine erste Dicke (E) hat, und einen zweiten Teil (2b), der eine zweite Dicke (e) hat, die kleiner als die erste ist, und
- ein Funktionsaufbauelement (4) aus Kunststoffmaterial, das eine Luftleitung (20a, 20b) einschließt, die auf der länglichen, metallischen Struktur geformt ist.

2. Verfahren zur Herstellung einer Gesamtstruktur (1) eines Armaturenbrettes, das die folgenden Schritte aufweist:
- Bilden einer metallischen Platte, um eine längliche Struktur (2) herzustellen, die einen ersten Teil (2a), der eine erste Dicke (E) hat, und einen zweiten Teil (2b) aufweist, der eine zweite Dicke (e) hat, die kleiner als die erste ist, und
- Abformen der länglichen Struktur mit dem Kunststoffmaterial, um ein Funktionselement (4) aus Kunststoffmaterial zu erhalten, das mit der metallischen, länglichen Struktur formschlüssig verbunden ist.

3. Verfahren nach Anspruch 2, **dadurch gekennzeichnet, daß** man eine erste metallische Platte, die im wesentlichen die erste Dicke hat, und eine zweite metallische Platte, die im wesentlichen die zweite Dicke hat, gesenkschmiedet und dann die erste und die zweite metallische Platte zusammenfügt, um die längliche Struktur herzustellen, bevor sie abgeformt wird.

4. Verfahren nach Anspruch 2, **dadurch gekennzeichnet, daß**:
- man eine erste metallische Platte, welche die erste Dicke hat, und eine zweite metallische Platte, welche die zweite Dicke hat, in einer Gesenkeindrückung anordnet, wobei eine Verbindungszone (3) ausgespart wird, in welcher sich die erste und die zweite metallische Platte überschneiden,
- man dann die erste und die zweite metallische Platte durch Verformung in der Verbindungszone der ersten und zweiten metallischen Platte gleichzeitig prägt und zusammenfügt.

5. Verfahren nach Anspruch 2, **dadurch gekennzeichnet, daß** man ein Blech von im wesentlichen konstanter Dicke in einer Walzmaschine walzt, um die metallische Platte zu erhalten, welche in einer Zone (32) im wesentlichen die erste Dicke und in einer anderen Zone (34) die zweite Dicke aufweist.

6. Verfahren nach Anspruch 2, **dadurch gekennzeichnet, daß** man eine erste metallische Platte, welche im wesentlichen die erste Dicke hat, und eine zweite metallische Platte bildet, die im wesentlichen die zweite Dicke hat, und man dann die erste und die zweite metallische Platte durch Kleben zusammenfügt.

7. Verfahren nach Anspruch 2, **dadurch gekennzeichnet, daß** man eine erste metallische Platte, die im wesentlichen die erste Dicke hat, und eine zweite metallische Platte bildet, die im wesentlichen die zweite Dicke hat, und man dann die erste und die zweite metallische Platte durch Schweißen zusammenfügt.
